# EUROPEAN PATENT APPLICATION

(11) **EP 3 865 200 A1**
(43) Date of publication of application: **18.08.2021**
(21) Application number: 20396001.8
(22) Date of filing: 12.02.2020
(51) Int. Cl.: B01D 46/00, B01D 46/42, B01D 46/48, B24B 55/06, F24F 3/16

(54) **DUST CONTROL DEVICE**

(71) Applicant: Luftair Oy, 24240 Salo (FI)
(72) Inventor: Laaksonen, Kari, FI-21110 Naantali (FI)
(74) Representative: Pirhonen, Kari Lennart

(57) **Abstract**

A dust control device (10), with the help of which harmful particles can be removed from a workspace during construction and/or renovation work, which dust control device includes a motor-driven fan (12), which sucks air from the workspace, which air is fed through an air filter (11) located in the device such that dust particles and other particles that are harmful to the employee remain in the air filter, which dust control device's (10) exhaust air is fed through a damping chamber (22) in conjunction with the device or through a damping chamber (40) otherwise connected to the device in which the velocity of the exhaust air coming from the fan (12) is significantly reduced so that the exhaust air does not cause dust or other fine particles on the floor or other surfaces to be raised and mix with the workspace air.

## Description

The object of the invention is a dust control device according to the preamble to claim 1. A particular object of the invention is a device for dust control and for the removal of harmful particles from a workspace or some other space where work is carried out during construction and/or renovation work. The dust control device has a motor-driven fan that sucks from the workspace air, which is fed through an air filter in the device so that the dust particles in the air and other fine particles that are harmful to employees remain in the air filter. Especially harmful to all of the persons in the workspace is asbestos dust, which means that the dust control device must have an efficient HEPA filter.

Dust control devices are used at construction and/or renovation worksites such that there is connected to the device an exhaust air hose, with the help of which air fed through the device's air filter is fed out of the workspace. In this case, the dust control device functions at the same time as a negative air machine for the workspace. However, if the worksite is located, for example, in a basement or elsewhere in the inner part of a building, the length of the required exhaust air hose can be significant. In this case, the bringing into use of the dust control device is significantly difficult. Long exhaust air hoses are difficult to handle and installing them is laborious.

Long exhaust air hoses are disadvantageous in many other respects also. The flow resistance caused by the hoses significantly increases the device's energy consumption. They are also an occupational safety risk because they are easy to trip over. Feeding the hoses out of the building also causes problems. If a hose is fed out of a window, an insulating foam board, for example, must be installed in the window. Boards such as this are not very durable, however, which may give burglars the opportunity to break into the building.

The purpose of this invention is to achieve a dust control device that overcomes the above-mentioned drawbacks. The invention is characterised in what has been presented in the characteristics section of claim 1. The other characteristics of the invention are presented in the other claims.

According to the invention, the exhaust air of the dust control device is fed from the workspace or other space in which work is performed during construction and/or renovation work to a damping chamber in conjunction with the device or through a damping chamber connected in some other way to the device, in which the velocity of the exhaust air coming from the fan decreases significantly. According to the invention, the velocity of the dust control device's exhaust air can be dampened so much that it does not cause dust or other fine particles on the workspace's or other space's floor or other surfaces to rise up and mix with the air of the workspace or other space. In this case, the exhaust air of the dust control device can be fed from the device back into the workspace or into another space, and it does not need to be fed into the outside air as in known devices.

The dust control device according to the invention does not create negative pressure in the workspace. In known dust control devices, the negative pressure forming in the workspace is the result of the exhaust air being fed into the outside air. In known devices, the primary reason for feeding the exhaust air into the outside air is to prevent directing the air flow caused by the fan near the device, which would cause dust to rise up from the workspace's floor and other surfaces. When using a dust control device according to the invention, there is no need to form negative pressure because the velocity of the air flow achieved by the fan has been reduced so much that it does not cause dust to rise up from the workspace's or other space's floors and/or other surfaces.

It is advantageous that the device according to the invention without a separate exhaust air hose can be left to operate in the workspace continuously around the clock and on weekends when there is nobody in the workspace. It is especially advantageous because even the smallest particles can gradually be filtered from the air during the night, such as for example harmful quartz crystal dust. When the exhaust air is not fed out, harmful particles are not released into the outside air during disturbances either. In known devices, harmful particles can be released into the outside air if, for example, the air filter of the dust control device is damaged.

The dust control device according to the invention is multifunctional because it can be used as a dust collector and/or alternatively as a negative air machine, if required. When the device according to the invention is used as a dust collector, an exhaust air hose is not required. If the device according to the invention is to be used as a negative air machine, an exhaust air hose is attached to it, with the help of which the exhaust air is fed from the workspace into the outside air or into another space, which can be in the same building as the workspace. However, it is also possible to only feed part of the dust control device's exhaust air from the workspace into the outside air or into another space and let part of the dust control device's exhaust air back into the workspace. An arrangement such as this is beneficial because, among other things, only a small and easy-to-handle hose is required for feeding part of the exhaust air out of the workspace.

The dust control device according to the invention can have a structure such that the damping chamber that reduces the exhaust air flow rate is an integral part of the dust control device or it is attached to the exhaust air outlet of the dust control device as an attachment. The dust control device's damping chamber acting as an attachment can be fastened to the exhaust air outlet of the dust control device either directly or through a hose. The hose does not necessarily have to be long. A reason for using a hose could be, for example, that this enables the division of the equipment into two parts that are easier to transport and handle. In this case, the first part has the air filter and fan, and the second part has the damping chamber that reduces the flow rate of the exhaust air. A two-part dust control device is also practical because it can easily be moved around in the workspace. As the various stages of the work progress, the parts of the dust control device can easily be moved out of the way. If the used hose is long enough, for example the part of the dust control device equipped with an air filter and fan can be kept in the workspace and the other part of the dust control device which has the damping chamber that reduces the exhaust air flow rate can easily be moved in the workspace further from the worksite or if required into another room.

A known dust control device equipped with an exhaust hose can also be changed into a dust control device according to the invention such that the damping chamber according to the invention that reduces the exhaust air flow rate is alternatively connected either to the exhaust hose of the known dust control device or the hose is removed entirely and the damping chamber is connected directly or through an intermediate piece to the exhaust air outlet of the known dust control device. If the damping chamber is connected to the exhaust hose, the hose can be shortened, if required, to be very short because in the dust control device according to the invention, the exhaust air does not need to be fed into the outside air.

In the following, the dust control device according to the invention is described using examples with reference to the appended drawings, in which embodiments of the dust control device according to the invention are shown as cross-sectional schematic views.
- Fig. 1: shows a dust control device according to the invention.
- Fig. 2: shows a second embodiment of the dust control device according to the invention.
- Fig. 3: shows a third embodiment of the dust control device according to the invention.

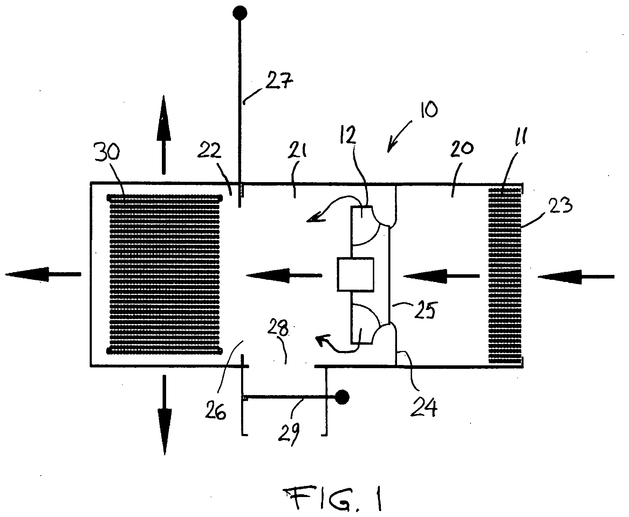

Figure 1 shows a dust control device 10 according to the invention, in which is an air filter 11 and a fan 12. The workspace's air is suctioned using the fan 12 such that the air is fed through the air filter 11. The air filter 11 is usually an efficient HEPA filter, and air fed through it is so clean that it can be fed back to the workspace through a damping chamber that reduces the air flow rate.

In the example of Figure 1, the dust control device 10 consists of a housing in which are essentially three chambers or spaces. These are a filter space or filter chamber 20, a space for a fan 12, which in this instance is referred to as the pressure chamber 21 and a damping chamber 22 or space in which the flow rate of the air arriving from the fan 12 is reduced before the air exits the dust control device 10. The filter chamber 20 can also be a partially open space in which the air filter 11 is located. In its outer wall is an opening 23 equipped with a protective grill, through which the suctioned in air is fed to the air filter 11. The wall 24 between the filter chamber 20 and the pressure chamber 21 is the fan's 12 inlet air opening 25 through which the filtered air is fed to the fan 12. The fan 12 is located in the space adjacent to the filter chamber 20, i.e. in the pressure chamber 21, where pressure caused by the fan 12 is formed when the dust control device 10 is operating.

In the example of Figure 1, air is fed from the pressure chamber 21 to the damping chamber 22, whose outer walls 30 have several small holes. There may be a significant number of holes. When it flows through the small holes, the flow rate of the air exiting the damping chamber 22 is reduced so much that the exiting air flow cannot raise dust or other particles from the workspace's or some other space's floor or other surfaces. In this case, the exhaust air of the dust control device 10 according to the invention does not need to be fed into the outside air as in known devices.

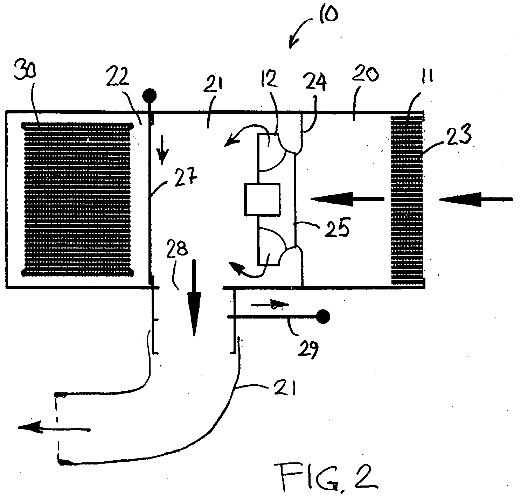

In the dust control device 10 presented in Figure 1, in the pressure chamber 21 there is an opening 26 leading to the damping chamber 22, which opening is equipped with a shutter 27 and another opening 28 leading out of the pressure chamber 21, which opening is also equipped with a shutter 29. The operating and purpose of the shutters 27 and 29 are described in more detail in connection with the example of Figure 2. At its simplest, the dust control device 10 according to the invention can be made so that there is no opening 28 leading out of the pressure chamber 21 and there is no shutter 27 from the pressure chamber 21 to the damping chamber 22. In this case, the pressure chamber 21 and the damping chamber 22 together form the damping chamber of the dust control device 10.

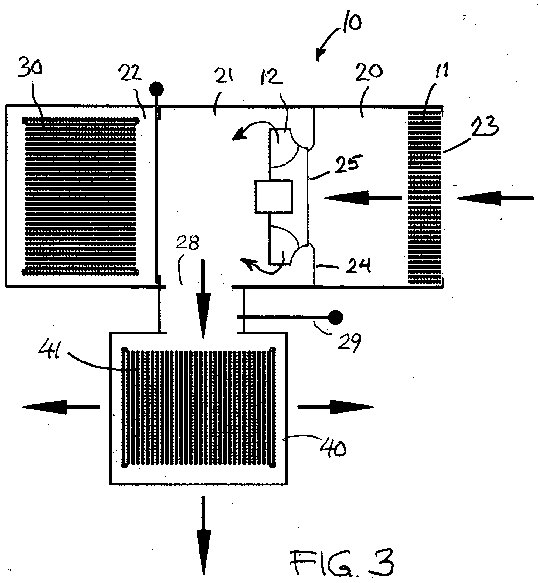

Figure 2 shows an example of the dust control device 10 according to the invention, in which the opening 26 between the pressure chamber 21 and damping chamber 22 located in the same housing is closed with a shutter 27 and the shutter 29 of the opening 28 leading out of the pressure chamber 21 is open. A hose 31 is connected to the opening 28, through which the exhaust air of the dust control device 10 is fed further from the worksite. In this case, the dust control device 10 according to the invention can be used, if required, in the same way as known dust control devices, but it is advantageous according to the invention that the hose 31 does not need to be fed into the outside air. According to the invention, the hose 31 can be relatively short and a damping chamber 40 according to the invention can be attached to its end, which damping chamber is described in more detail in Figure 3.

The dust control device 10 according to Figure 2 can also be used such that the shutter 27 between the pressure chamber 21 and the damping chamber 22 is opened partially or fully, in which case the exhaust air of the fan 12 is divided into two parts and fed through both the primary damping chamber 22 and the hose 31 on the end of which is, for example, another damping chamber 40 as an attachment to the dust control device 10. In some cases, it is advantageous for the exhaust air of the fan 12 to be divided into two parts. In this case, the shutter 27 can be used to adjust how large a portion of the exhaust air of the fan 12 passes through the primary damping chamber 22 and how much passes through the other damping chamber 40. The benefit of the divided air flow is also that smaller air flows pass through both damping chambers 22 and 40, in which case the flow rates are also efficiently reduced.

Figure 3 shows an example of the dust control device 10 according to the invention, in which a damping chamber 40, whose external walls 41 have a large number of small holes, is connected, either directly or through an intermediate piece, to the opening 28 leading out of the pressure chamber 21. This damping chamber 40 operates similarly to the damping chamber 22 of the embodiment in Figure 1, i.e. it reduces the flow rate of the air flowing out so that it is so small that the exiting air flow does not raise dust or other particles from the workspace's or other space's floor or other surfaces. In the example in Figure 3, an external damping chamber 40 has been attached in connection with a dust control device 10 which already has a primary damping chamber 22. In this case all of the alternative uses are possible. The air flowing out of the dust control device 10 can be fed out of the device, if required, through the damping chamber 22 or an external damping chamber 40. Both damping chambers 22 and 40 can be used together, in which case the flow rate of even a large volume of air can be made very small. What is essential, however, is that in this way also known dust control devices which do not include a primary damping chamber 22 can, with the help of an external damping chamber 40, be changed into dust control devices according to the invention. In this case, an external damping chamber 40 is placed at the end of the exhaust hose 31 or instead of the exhaust hose 31. The hose 31 can be very short because it does not need to be fed out of the building into the outside air.

In the examples given above, the reducing impact of the damping chambers 22 and 40 on the air flow rate has been achieved with a large number of small holes in the external walls, through which the air flow is fed out of the device. According to the invention, the damping of the flow rate achieved by the damping chambers 22 and 40 can be enhanced further in many ways by adding into the damping chambers 22 and 40 flow rate reducing partition walls or labyrinths through which the exiting air flow is fed.

In the examples of the illustrations' figures, the shutter 27 between the pressure chamber 21 and the damping chamber 22 is shown schematically as a sheet similar to an ordinary chimney's damper, which, when closed, is pushed between the chambers 21 and 22. According to a preferred embodiment of the invention, the shutter 27 can, however, also be made such that between the pressure chamber 21 and the damping chamber 22 is a wall which has several holes and the movable shutter sheet has the same kind of holes in corresponding locations. When the shutter sheet is pushed into place in front of the wall, air is released from the pressure chamber 21 and into the damping chamber 22 through these holes. The shutter is closed such that the shutter sheet is pulled sideways suitably, in which case the holes of the movable sheet and the wall's holes do not coincide. A shutter of this kind is advantageous because the air flow has to travel from the pressure chamber 21 to the damping chamber 22 through several holes, in which case the velocity of the air flow will drop already at this stage.

In the illustrations' examples, the shutter 29 of the opening 28 leading out of the pressure chamber 21 is also shown, for the sake of illustration, as a corresponding movable sheet similar to the damper of a chimney. According to a preferred embodiment of the invention, the opening 28 does not need to have a separate shutter at all, instead the opening can be closed, if required, for example with a blind flange.

What is essential for the dust control device according to the invention is that in conjunction with it is a damping chamber which reduces the flow rate of the exhaust air coming out of the dust control device such that the air flow does not raise dust or fine particles that are on the floor or other surfaces. In the dust control device, the air filter is located in the filter space or filter chamber and the fan is located in the space adjacent to the filter chamber, i.e. the pressure chamber. In the wall between the filter chamber and the pressure chamber is an opening through which the fan sucks air coming through the air filter into the pressure chamber. In the dust control device, the pressure chamber and damping chamber can be in conjunction with one another.

The workspace's air is fed with a fan from the filter chamber to the pressure chamber, to whose outlet opening a separate damping chamber whose outer wall has a large number of small holes can be connected directly or with a connecting element. In this case, the exhaust air can be fed through a separate damping chamber connected to the outlet opening of the damping chamber and pressure chamber in conjunction with the device such that the exhaust air flow is divided into two parts and exits into the workspace through both damping chambers. The division of the exhaust air flow into the damping chambers can be adjusted using a shutter located between the pressure chamber and fixed damping chamber.

Advantageously, the dust control device consists of a housing, in which are a filter chamber, pressure chamber and damping chamber, and that the wall leading from the pressure chamber to the damping chamber has an opening equipped with a shutter, and the opening leading out of the pressure chamber has a shutter. A hose can be connected to the opening leading out of the pressure chamber, onto the end of which hose is connected a separate damping chamber through which at least part of the dust control device's exhaust air is fed into another part of the workspace or outside the workspace.

### LIST OF REFERENCE NUMBERS

- 10: Dust control device
- 11: Air filter
- 12: Fan
- 20: Filter chamber
- 21: Pressure chamber
- 22: Damping chamber
- 23: Opening
- 24: Partition wall
- 25: Suction opening
- 26: Opening
- 27: Shutter
- 28: Opening
- 29: Shutter
- 30: External wall
- 31: Hose

## Claims

1. A dust control device (10), with the help of which harmful particles can be removed from a workspace or other space in which work is performed during construction and/or renovation work, which dust control device includes a motor-driven fan (12), which sucks air from the working space, which air is fed through an air filter (11) located in the device such that dust particles and other harmful fine particles in the air remain in the air filter, **characterised in that** in the dust control device (10) or in conjunction with it is a damping chamber (22, 40) which reduces the flow rate of the exhaust air coming out of the dust control device such that the air flow does not raise dust or fine particles into the air from the floor of the workspace or working space or from its other surfaces.

2. A dust control device (10) according to claim 1, **characterised in that** the air filter (11) of the dust control device (10) is located in the filter space or filter chamber (20), and the fan (12) is located in a space adjacent to the filter chamber (20), i.e. in a pressure chamber (21), and that the wall between the filter chamber (20) and the pressure chamber (21) has an opening (25) through which the fan (12) sucks in air coming through the air filter (11) into the pressure chamber (21), and that the dust control device (10) has a damping chamber (22, 40), which reduces the flow rate of the exhaust air exiting the dust control device such that the exhaust air flow does not raise into the air dust or fine particles from the workspace or working space floor or other surfaces.

3. A dust control device (10) according to claim 1 or 2, **characterised in that** the pressure chamber (21) and damping chamber (22) in the dust control device (10) are in conjunction with one another and that the outer wall (30) of the damping chamber (22) has a large number of small holes through which the exhaust air of the fan (12) exits.

4. A dust control device (10) according to claim 1 or 2, **characterised in that** in the dust control device (10) the workspace air is fed from the filter chamber (20) through a fan (12) into the pressure chamber (21), to whose outlet opening (28) is connected directly or with a connecting element a separate damping chamber (40) whose outer walls (41) have a large number of small holes.

5. A device according to any one of claims 1-4, **characterised in that** the exhaust air of the dust control device (10) is fed through a separate damping chamber (40) connected to the outlet opening (28) of the damping chamber (22) and pressure chamber (21) in conjunction with the device such that the exhaust air flow is divided into two parts and exits into the workspace through both damping chambers.

6. A device according to any one of claims 1-5, **characterised in that** the dust control device (10) has a fixed damping chamber (22) and a separate damping chamber (40) connected to the outlet opening (28) of the pressure chamber (21), and that the division of the flow of exhaust air into these damping chambers (22, 40) can be adjusted with a shutter (27) located between the pressure chamber (21) and fixed damping chamber (22).

7. A device according to any one of claims 1-6, **characterised in that** the dust control device (10) consists of a housing, in which are a filter chamber (20), pressure chamber (21) and damping chamber (22), and that the wall leading from the pressure chamber (21) to the damping chamber (22) has an opening (26) equipped with a shutter (27) and the opening (28) leading out of the pressure chamber (21) has a shutter (29).

8. A device according to any one of claims 1-7, **characterised in that** a hose (31) is connected to the opening (28) leading out of the dust control device's (10) pressure chamber (21), onto the end of which hose is connected a separate damping chamber (40) through which at least part of the exhaust air of the dust control device (10) is fed into another part of the workspace or outside the workspace.
